# EUROPÄISCHE PATENTSCHRIFT

(11) **EP 3 387 293 B1**
(45) Veröffentlichungstag und Bekanntmachung des Hinweises auf die Patenterteilung: **25.08.2021**
(21) Anmeldenummer: 17708455.5
(22) Anmeldetag: 28.02.2017
(51) Int. Cl.: F16H 49/00

(54) **SPANNUNGSWELLENGETRIEBE MIT INNENDICHTUNG**
STRAIN WAVE GEAR MECHANISM WITH AN INNER SEAL
TRANSMISSION HARMONIQUE AVEC JOINT INTÉRIEUR

(43) Veröffentlichungstag der Anmeldung: 17.10.2018
(73) Patentinhaber: Harmonic Drive SE, 65555 Limburg/Lahn (DE)
(72) Erfinder: MENDEL, Matthias, 65549 Limburg (DE); SCHAFFER, Michael, 65611 Niederbrechen (DE); GÖBEL, Dominik, 56495 Kaden (DE); ARTHEN, Alexander, 65611 Brechen (DE); KOENEN, Johannes Petrus, 65555 Limburg (DE)
(74) Vertreter: Müller, Eckhard
(86) Internationale Anmeldenummer: PCT/EP2017/054549
(87) Internationale Veröffentlichungsnummer: WO 2018/157910

(56) Entgegenhaltungen:
- DE-A1- 19 741 227
- DE-A1-102013 222 454
- DE-T5-112014 001 512
- US-A1- 2002 135 241

## Beschreibung

Die Erfindung betrifft ein Spannungswellengetriebe nach dem Oberbegriff des Anspruchs 1.

Derartige Getriebe werden in vielfältiger Weise in vielen Technologiebereichen eingesetzt, sie finden insbesondere in der Robotertechnik und auch in der Prothetik vermehrt Anwendung. Beispielhaft sei hier auf das Harmonic Drive® Getriebe der Anmelderin verwiesen, welches zur Gruppe der Spannungswellengetriebe gehört und dessen Funktionsweise beispielhaft unter http://harmonicdrive.de/technologie/harmonicdrive-wellgetriebe/ beschrieben ist; Harmonic Drive® ist eine eingetragene Marke der Harmonic Drive AG, Limburg an der Lahn.

In der herkömmlichen Bauweise des Spannungswellengetriebes verformt das dort als elliptischer "Wave Generator" bezeichnete Antriebsbauteil über ein Wälzlager das als außenverzahnter Flexspline bezeichnete Übertragungsbauteil, welches sich in den gegenüberliegenden Bereichen der großen Ellipsenachse mit dem innenverzahnten, als Circular Spline bezeichneten Getriebebauteil im Eingriff befindet. Mit Drehen des Wave Generators verlagert sich die große Ellipsenachse und damit der Zahneingriffsbereich. Da der Flexspline des Spannungswellengetriebes zwei Zähne weniger als der Circular Spline besitzt, vollzieht sich während einer halben Umdrehung des Wave Generators eine Relativbewegung zwischen Flexspline und Circular Spline um einen Zahn und während einer ganzen Umdrehung um zwei Zähne, wodurch sich ein hohes Übersetzungsverhältnis realisieren lässt. Bei fixiertem Circular Spline dreht sich der Flexspline als Abtriebselement entgegengesetzt zum Antrieb. Der Circular Spline kann dabei an einem Lagerring fixierbar angeordnet sein.

Bei der Flachbauweise ist der Flexspline als ein dünnwandiger, elastisch verformbarer Ring ausgeführt, der durch den Wave Generator eine elliptische Form annimmt. Die Außenverzahnung des Flexspline befindet sich im Eingriff mit der Innenverzahnung des Circular Splines sowie mit einer Innenverzahnung eines zusätzlich vorgesehenen Dynamic Splines. Der Dynamic Spline ist ein innenverzahntes Hohlrad mit gleicher Zähnezahl wie der Flexspline. Er rotiert in gleicher Drehrichtung und mit gleicher Drehzahl wie der Flexspline und wird im Untersetzungsbetrieb als Abtriebselement eingesetzt.

Das Spannungswellengetriebe kann neben einer herkömmlichen Bauweise auch in einer sogenannten Flachbauweise oder in inverser Bauweise, als sogenannter Außenläufer ausgeführt sein.

Hierüber ist der Flexspline als flexibles, innenverzahntes Bauteil ausgeführt, welches von elliptisch geformten Wave Generator sowie einem Wälzlager im Verzahnungsbereich umgeben ist. Die Innenverzahnung des Flexsplines greift dabei in die Außenverzahnung des als Zahnrad ausgeführten Circular Splines ein. Im Gegensatz zum herkömmlichen Spannungswellengetriebe tritt der gegenseitige Zahnkontakt zwischen dem hier innenverzahnten Flexspline und dem Wave Generator an der abgeflachten Seite seiner elliptischen Form, also im Bereich der kleinen Halbachse auf.

Im Rahmen der vorliegenden Anmeldung werden die Begriffe Getriebebauteil Circular Spline und die Abkürzung "CS" synonym verwendet. Ferner werden die Begriffe Antriebsbauteil, Wave Generator, Wellgenerator sowie die Abkürzung "WG" synonym verwendet. Außerdem werden die Begriffe Übertragungsbauteil, Flexspline sowie die Abkürzung "FS" synonym verwendet.

Besonders vorteilhaft an den Spannungswellengetrieben ist, dass sie über ihre gesamte Lebensdauer praktisch keine Spielzunahme in der Verzahnung aufweisen und eine hervorragende Positioniergenauigkeit von weniger als einer Winkelminute und eine Wiederholgenauigkeit von nur wenigen Winkelsekunden besitzen. Zudem sind Spannungswellengetriebe wesentlich kompakter und leichter als konventionelle Getriebe, sodass sie besonders für den Einsatz in der Robotik, Prothetik und dergleichen technischen Gebiete geeignet sind, in welchen hochgenaue Drehbewegung auf kleinstem Raum realisiert werden müssen. Zur Realisierung einer Drehbewegung zwischen zwei Bauteilen des Getriebes wird es entweder mit einem Drehlager verbunden oder bildet selbst zumindest einen Teil eines Drehlagers.

Da die Kraftübertragung über einen großen Zahneingriffsbereich erfolgt, können Spannungswellengetriebe bei ähnlicher Baugröße in der Regel höhere Drehmomente als konventionelle Getriebe übertragen. Im einfachsten Fall mit nur drei wesentlichen Bauteilen, nämlich dem Flexspline, den Circular Spline und dem Wave Generator, werden Untersetzungen von 30:1 bis 320:1 in einer Stufe erreicht. Im Nennbetrieb werden Wirkungsgrade bis zu 85 % erreicht. Spannungswellengetriebe sind in der Regel nicht selbsthemmend und weisen gewöhnlich kein oder nahezu kein Stick-Slip-Verhalten auf. Zum Erreichen dieser besonderen Vorteile werden derartige Getriebe oftmals mit einer teilweise als Lebensdauerschmierung vorgesehenen Schmiermittelmenge versehen, die insbesondere zur Schmierung der Verzahnung sowie des Antriebsbauteillagers dient.

Hierzu wird das Schmiermittel beispielsweise auf die der Verzahnung gegenüberliegende Seite des flexiblen Übertragungsbauteils aufgebracht. Unterstützt durch die bei Betrieb von dem Übertragungsbauteil ausgeführte "Walkbewegung", gelangt das Schmiermittel zu den gewünschten Schmierstellen an der Verzahnung und dem Antriebsbauteillager. Aufgrund der ebenfalls an der Verzahnung auftretenden Walkbewegung tritt das "verbrauchte" Schmiermittel aus dem Bereich der Verzahnung aus und lagert sich innerhalb des Getriebes ab.

In bestimmten Anwendungsfällen kann es vorkommen, dass das verbrauchte Schmiermittel innerhalb des Getriebes wandert, beispielsweise bis zu dem Drehlager des Getriebes gelangt und durch den dort vorhandenen Lagerzwischenraum hindurchtritt. Der Lagerzwischenraum kann bei Bedarf mittels eines äußeren Radialwellendichtrings gegen den Eintritt unerwünschter Materialien oder den Austritt von Wälzlagerfett abgedichtet werden. Ein solcher Dichtring hält jedoch einer Beaufschlagung mit einer großen Menge Getriebeschmiermittel häufig nicht stand, so dass es zu einer unerwünschten Schmiermitteleckage kommen kann. Eine derartige Schmiermittelleckage kann dazu führen, dass innerhalb des Getriebes jenseits der Verzahnung kaum Rückstau verbrauchten Schmiermittels auftritt, wodurch sich die aufgrund der Walkbewegung nachgeförderte Schmiermittelmenge erhöht und das Getriebe vorzeitig trockenlaufen kann.

Aus der DE 10 2013 222 454 A1 ist ein Spannungswellengetriebe bekannt, dessen Getriebegehäuse zusammen mit einem ersten und einem zweiten Wälzlager mittels mindestens einem Radialwellendichtring öldicht und/oder fettdicht abgedichtet ist.

Die US 2002/0135241 A1 offenbart einen Lagerzwischenraum, der mittels eines äußeren Radialwellendichtrings gegen den Eintritt unerwünschter Materialien von außen abgedichtet ist.

Die DE 11 2014 001 512 T5 beschreibt ein Spannungswellengetriebe mit Hohlwelle, bei welchem eine innerhalb des Übertragungsbauteils angeordnete Öldichtung verhindern soll, dass Schmiermittel von einem außen verzahnten Übertragungsbauteil in einen hohlen Bereich innerhalb der Hohlwelle eintritt. Aus der CN 105864365 A ist eine ähnliche Anordnung bekannt.

Die DE 197 41 227 A1 sieht ein Spannungswellengetriebe vor, bei welchem das Übertragungsbauteil eine stirnseitig angeordnete Dichtlippe aufweist, die gegen einen feststehenden Gehäusedeckel des Getriebes abgestützt ist.

Die US2015/0285357 A1 offenbart ein Spannungswellengetriebe mit einem zwischen dem Getriebebauteil und einem Lagerring eines Wälzlagers angeordneten Filterelement, welches für Schmiermittel durchlässig ist und den Eintritt von Verzahnungsabrieb in das Wälzlager verhindern soll.

Aus der JP 7-119800 A ist ein Spannungswellengetriebe mit einer auf die Außenseite des Übertragungsbauteils aufgeklebten Innendichtung bekannt.

Aus der TW I269847 ist eine Dichtungsanordnung bekannt.

Aus der CN 205677987 U ist ein Wälzlager mit Dichtungen zum Abdichten des Lagerinnenraums bekannt.

Ausgehend von den zuvor beschriebenen Nachteilen liegt der Erfindung die Aufgabe zugrunde, ein verbessertes Spannungswellengetriebe anzugeben, bei welchem die Gefahr einer Schmiermittelleckage und/oder die Gefahr eines vorzeitigen Trockenlaufens zuverlässig reduziert werden kann.

Diese Aufgabe wird gelöst mit einem Spannungswellengetriebe nach Anspruch 1. Dies hat den Vorteil, dass in dem Getriebeinnenraum etwaig befindliche und für das Drehlager möglicherweise nachteilige Stoffe in dem Innenraum gesammelt werden und ein Eintreten dieser Stoffe in das Drehlager oder ein Hindurchtreten durch das Drehlager verhindert oder zumindest stark herabgesetzt wird. So können etwa Schmierfett, Zahnabrieb, Späne oder andere Fremdkörper, die sich in dem Innenraum des Getriebes ansammeln, an einem Eintritt in das Drehlager gehindert werden. Außerdem wird eine dadurch mögliche, durch das Drehlager hindurchtretende Leckage verhindert oder zumindest stark herabgesetzt. Die Abdichtung erfolgt in der Weise, dass so gut wie kein Getriebeschmiermittel in das Drehlager eintritt. Dies ist insbesondere dann von Vorteil, wenn das Drehlager im Unterschied zu der Getriebeverzahnung trockenlaufend ausgebildet ist, beispielsweise als trockengeschmiertes Gleit- oder Wälzlager oder aber als Magnetlager ausgebildet ist. Von besonderem Vorteil kann eine Abdichtung gegen den Durchtritt von Getriebeschmiermittel durch das Drehlager auch dann sein, wenn das Getriebeschmiermittel und ein in dem Drehlager verwendetes Lagerschmiermittel chemisch oder aus einem anderen Grund inkompatibel sind. Erfindungsgemäß ist außerdem vorgesehen, dass die Innendichtung im Wesentlichen aus einem Elastomer besteht. Die Verwendung eines Elastomers erlaubt es, die Innendichtung kostengünstig herzustellen und außerdem widerstandsfähig gegenüber den in dem Getriebe verwendeten Chemikalien wie etwa Schmiermitteln zu machen.

Gemäß der Erfindung nach Anspruch 1 ist es vorgesehen, dass die Innendichtung abschnittsweise auch als statische Dichtung ausgebildet ist und zwischen zwei rotationsfest miteinander verbundenen Teilen des Spannungswellengetriebes eingesetzt ist. Insbesondere kann hierbei vorgesehen sein, dass die Innendichtung mit wenigstens einem O-Ring ausgebildet ist, so dass die Innendichtung durch die Festlegung des O-Rings innerhalb des Getriebes bereits in der gewünschten Einbauposition gehalten wird.

Vorteilhafterweise kann vorgesehen sein, dass die Innendichtung zwischen dem Übertragungsbauteil und einem Lagerring des Drehlagers angeordnet ist und dichtend an dem Lagerring anliegt mit wenigstens einem Dichtvorsprung und/oder einer Dichtlippe und/oder einer Dichtfläche. Hierdurch kann die Abdichtung während der Montage mit geringem Aufwand in das Spannungswellengetriebes integriert werden.

Bevorzugt kann die Innendichtung nach Anspruch 1 unter Vorspannung, vorzugsweise unter federnder Vorspannung, insbesondere unter Eigenvorspannung an einer Dichtfläche des Spannungswellengetriebes anliegen. Auf diese Weise kann die Zuverlässigkeit der Dichtwirkung noch weiter erhöht und gezielt eingestellt werden.

Die Innendichtung kann zudem in einem Bereich eine Überdeckung gegenüber einer Dichtfläche des Spannungswellengetriebes aufweisen. Eine Überdeckung ähnlich einer Presspassung ermöglicht eine besonders gute und zuverlässige Dichtwirkung, da hierdurch das Zusammenspiel zwischen Dichtfläche und Innendichtung genau eingestellt werden kann.

Alternativ kann vorgesehen sein, dass die Innendichtung im Bereich wenigstens eines Dichtvorsprungs zwischen der Dichtfläche und einem weiteren Bauteil des Spannungswellengetriebes mit Übermaß eingefügt ist, so dass der wenigstens eine Dichtvorsprung die Dichtfläche unter Vorspannung kontaktiert. Von Vorteil ist hierbei insbesondere, dass die Vorspannung der Dichtfläche durch das Übermaß der Innendichtung gezielt einstellbar ist. Diese Lösung eignet sich besonders für kleine Einbauräume und ist aufgrund der vorwiegend auf Druck beanspruchten Dichtkanten weitgehend unempfindlich gegenüber einem Kriechen des Dichtungsmaterials.

Als besonders vorteilhaft hat sich herausgestellt, das Übermaß der Innendichtung im Bereich des wenigstens einen Dichtvorsprungs so einzustellen, dass es einer Überdeckung von etwa 0 bis etwa 0,4 mm, vorzugsweise einer Überdeckung von etwa 80 µm bis etwa 240 µm entspricht. Dieser Wertebereich hat sich als besonders vorteilhaft hinsichtlich der Dichtwirkung und des Kriechverhaltens in dem Dichtungsmaterial herausgestellt.

Die Innendichtung ist erfindungsgemäß auch als Dichtscheibe ausgebildet, die einem Dichtabschnitt der Dichtfläche gegenüberliegt. Die Erfindung funktioniert entsprechend dem Dichtkonzept einer "Spaltdichtung". Eine Vorspannung der Innendichtung in Richtung der Dichtfläche ist nicht erforderlich, da die Dichtwirkung auf einer Verlängerung des theoretischen Strömungsweges durch den abzudichtenden Spalt beruht. Dadurch wird der einem Hindurchtreten bspw. des Schmierstoffes entgegenstehende Strömungswiderstand wesentlich erhöht wird. Diese erfindungsgemäß Ausbildung ist besonders für sehr kleine Bauräume geeignet. Dabei liegt der Dichtabschnitt vorzugsweise mit einem Abstand zwischen etwa 0 mm bis etwa 0,2 mm der Dichtfläche gegenüber.

Das Spannungswellengetriebe kann bevorzugt auch derart ausgebildet sein, dass der Innenraum ein Reservoir zur Aufnahme von in den Innenraum eintretendem Material, insbesondere von Schmiermittel bildet. Etwa durch die Verzahnung in den Innenraum des Spannungswellengetriebes eintretendes Material kann sich in dem Innenraum sammeln. Sofern der Innenraum ausreichend groß dimensioniert wird, etwa durch das Vorsehen von Ausnehmungen, Fasen, Absätzen oder Taschen, kann eine große Menge anfallenden Materials, vorwiegend Schmiermittel, aufgenommen werden, ohne dass dies die Innendichtung unnötig beaufschlagt und damit die Dichtwirkung beeinträchtigt. Auf diese Weise kann eine über die Lebensdauer des Spannungswellengetriebes vorgesehene Dichtwirkung noch zuverlässiger ermöglicht werden.

Dabei kann auch vorgesehen werden, dass eine Schmiermittelmenge zum Schmieren der Innen- und Außenverzahnung und/oder des Drehlagers und/oder eines Wellgeneratorlagers in und/oder an dem Spannungswellengetriebe vorgesehen ist, wobei das Volumen der Schmiermittelmenge kleiner oder gleich oder höchstens um den Faktor von etwa 1,1 größer ist als das Volumen des Innenraums. Auf diese Weise kann der Innenraum als Reservoir für verbrauchtes oder unverbrauchtes Schmierfett dienen und eine übermäßige Beaufschlagung der Innendichtung mit Schmierfett zuverlässig vermieden oder zumindest deutlich verringert werden.

Zur Vermeidung oder Verminderung einer Verschlechterung des Wirkungsgrades des Spannungswellengetriebes aufgrund der an der Innendichtung auftretenden Reibungskräfte kann vorgesehen sein, die Innendichtung und/oder eine mit der Innendichtung zusammenwirkende Dichtfläche zumindest bereichsweise reibungsmindernd zu behandeln. Das durch die Innendichtung verursachte Schleppmoment kann durch die Verwendung einer Oberflächenbehandlung zumindest deutlich herabgesetzt werden. Beispielsweise kann eine Beschichtung vorgesehen werden oder auch reibungsvermindernde Gleitlacke auf der Innendichtung und/oder der damit korrespondierenden Dichtfläche. Möglich ist auch die Verwendung reibungsoptimierter Werkstoffe für die Innendichtung als komplettes Bauteil, z.B. Polytetrafluoräthylen (PTFE) als Dichtungsmaterial. Alternativ kann ein reibungsoptimierendes Material auch partiell, also beispielsweise nur im Dichtlippen- bzw. Dichtkantenbereich aufgebracht werden, so dass die Innendichtung als Zweikomponentendichtung ausgebildet ist. Denkbar ist hier, beispielsweise etwa nur im Dichtlippenbereich zusätzlich Polytetrafluoräthylen (PTFE) vorzusehen. Alternativ kann auch die Oberfläche des metallischen Getriebebauteils reibungsoptimierend behandelt sein. Beispielsweise kann die Oberfläche gasnitriert, ionenimplantiert oder silbertitannitriert werden, um die im Zusammenspiel mit der Dichtung auftretende Reibung zu minimieren. Bei der Ionenimplantation können beispielsweise Stickstoff oder Argon als lonengas verwendet werden.

Reibungsverändernde Oberflächenbehandlung der Innendichtung und/oder der Dichtfläche wirken sich insbesondere auch positiv auf den Übergang zwischen Haft- und Gleitreibung, den so genannten Stick- Slip-Effekt aus, was gerade bei Anwendungen in der Robotik von Vorteil ist.

Gemäß einer Variante der Erfindung kann die Innendichtung mindestens eine, vorzugsweise zwei als Doppeldichtung wirkende O-Ringe und/oder Dichtvorsprünge und/oder Dichtlippen aufweisen. Hierdurch kann die Zuverlässigkeit und auch die Lebensdauer der Abdichtung erhöht werden. Auch lässt sich die Dichtwirkung deutlich erhöhen, wenn die Innendichtung mit ihren Dichtlippen zwischen zwei Bauteilen angeordnet ist, die durch die wiederkehrende, elastische Verformung an dem Übertragungsbauteil relativ zueinander beweglich sind.

### Darstellung der Erfindung

Weitere Ziele, Vorteile, Merkmale und Anwendungsmöglichkeiten der vorliegenden Erfindung ergeben sich aus der nachfolgenden Beschreibung eines Ausführungsbeispiels anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Dabei zeigen zum Teil schematisch:
- Figur 1: eine Schnittansicht eines Spannungswellengetriebes nach einer ersten nicht-erfindungsgemäßen Ausführungsform,
- Figur 2: einen vergrößerten Ausschnitt des Spannungswellengetriebes gemäß Figur 1,
- Figur 3: eine Schnittansicht eines Spannungswellengetriebes gemäß einer zweiten nicht-erfindungsgemäßen Ausführungsform,
- Figur 4: einen vergrößerten Ausschnitt des Spannungswellengetriebes gemäß Figur 3,
- Figur 5: eine seitliche Schnittansicht eines Spannungswellengetriebes gemäß einer erfindungsgemäßen Ausführungsform,
- Figur 6: einen vergrößerten Ausschnitt des Spannungswellengetriebes gemäß Figur 5,
- Figur 7: eine Ausschnittsvergrößerung des Spannungswellengetriebes gemäß Figur 1 im Bereich der Innendichtung,
- Figur 8: eine Ausschnittsvergrößerung des Spannungswellengetriebes gemäß Figur 3 im Bereich der Innendichtung und
- Figur 9: zeigt eine Ausschnittsvergrößerung des Spannungswellengetriebes gemäß Figur 5 im Bereich der Innendichtung.

Gleiche oder gleichwirkende Bauteile werden in den nachfolgend dargestellten Figuren der Zeichnung mit Bezugszeichen versehen, um die Lesbarkeit zu verbessern.

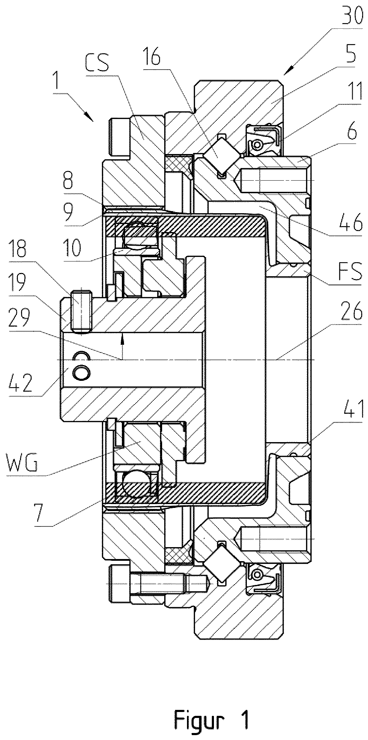

Figur 1 zeigt ein erstes, nicht-erfindungsgemäßes Ausführungsbeispiel eines Spannungswellengetriebes 1 mit einem als Innenzahnrad ausgebildeten Getriebebauteil CS, welches im Bereich seiner Innenverzahnung 8 mit der Außenverzahnung 9 eines Übertragungsbauteils FS in Deckung und bereichsweise in Eingriff ist. Das Getriebebauteil CS kann auch als Circular Spline, das Übertragungsbauteil als Flexspline bezeichnet werden. Das Übertragungsbauteil FS ist drehfest mit einem inneren Lagerring 6 eines Drehlagers 30 verbunden, welcher das Übertragungsbauteil FS und das Getriebebauteil CS drehbar zueinander lagert. Der äußere Lagerring 5 des Drehlagers 30 ist drehfest mit dem Getriebebauteil CS verbunden. Ebenfalls drehfest mit dem Übertragungsbauteil FS ist ein Stopfen 41 vorgesehen, der das Spannungswellengetriebe 1 zur in der Figur 1 rechts befindlichen Abtriebsseite des Spannungswellengetriebes 1 abschließt.

Entlang einer Getriebeachse 26, um die sich die Bauteile des Spannungswellengetriebes 1 bei Betrieb drehen, liegt dem Stopfen 41 eine Getriebeeingangswelle 19 gegenüber, auf welche ein Antriebsbauteil WG aufgesetzt ist. Das Antriebsbauteil WG wird auch als Wellgenerator oder Wave Generator bezeichnet. Zur Anbindung an eine äußere nicht gezeigte Eingangswelle verfügt die Getriebeeingangswelle 19 über eine oder mehrere Madenschrauben 18, mit welchen ein Wellenstumpf innerhalb einer Durchgangsbohrung 42 der Getriebeeingangswelle 19 festgelegt werden kann.

Das auf die Getriebeeingangswelle 19 aufgesetzte Antriebsbauteil WG weist in Richtung der Getriebeachse 26 gesehen eine elliptische Form auf, die in ein dazu korrespondierend geformtes Lager 10 des Wellengenerators eingepasst ist. Das Wellgeneratorlager 10 liegt innenseitig an dem Übertragungsbauteil FS derart an, dass das Übertragungsbauteil FS die elliptische Form annimmt und im Bereich der großen Ellipsenachse mit der Innenverzahnung 8 des Getriebebauteils CS in Eingriff kommt.

Beim Betreiben der Getriebeeingangswelle 19 um die Getriebeachse 26 wird das Übertragungsbauteil FS durch das Antriebsbauteil WG zyklisch verformt, so dass es zu einer Relativbewegung zwischen dem Übertragungsbauteil FS und dem Getriebebauteil CS durch den sich verlagernden Zahneingriff kommt.

Die in Radialrichtung 29 in wesentlichen in Deckung befindlichen Innenverzahnungen 8 des Getriebebauteils CS und die Außenverzahnung 9 des Übertragungsbauteils FS bewirken durch die um zwei Zähne abweichende Zähnezahl eine hohe Untersetzung zwischen der Bewegung an der Getriebeeingangswelle 19 und der Drehbewegung des als Abtrieb dienenden inneren Lagerrings 6 des Drehlagers 30. Das Getriebebauteil CS sowie der äußere Lagerring 5 sind dabei drehfest im Verhältnis zur Eingangs- und Ausgangsseite des Getriebes festgelegt. Die Drehbewegung an der Getriebeabtriebsseite ist in diesem Fall entgegengesetzt zu der Drehbewegung an der Eingangsseite.

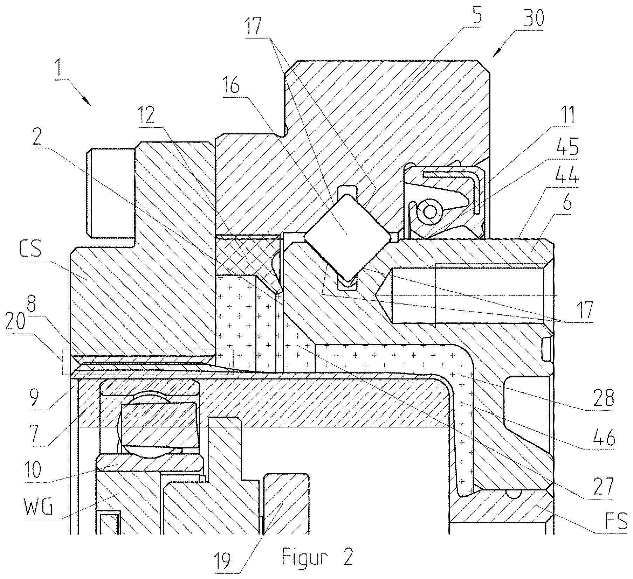

Das in der Figur 1 gezeigte Spannungswellengetriebe 1 ist in der Figur 2 ausschnittsweise vergrößert dargestellt. Dabei ist zu erkennen, dass das Drehlager 30 an seinem äußeren Lagerring 5 und seinem inneren Lagerring 6 Lagerlaufbahnen 17 für Wälzkörper aufweist, die in einem Lagerzwischenraum 16 zwischen den Lagerringen 5, 6 aufgenommen werden. Das Drehlager 30 kann anstelle eines Wälzlagers auch als Gleitlager oder Magnetlager ausgebildet sein. Bei der Ausbildung als Gleitlager oder als Wälzlager wird ein Lagerschmiermittel verwendet, welches zur Reibungsminderung bei der Bewegung der Wälzlagerkörper beziehungsweise der Lagerflächen verwendet wird.

Um einen Austritt von Lagerschmiermittel nach außen zu verhindern, kann, wie vorliegend gezeigt, eine Außendichtung 11 den Lagerzwischenraum 16 zwischen dem äußeren Lagerring 5 und dem inneren Lagerring 6 abdichten. Im vorliegenden Fall ist die Außendichtung 11 als Radialwellendichtring ausgebildet, der sich radial außen an einem Absatz 43 innerhalb des Lagerrings 5 abstützt und gegenüberliegend mit einer Dichtkante 45 auf einer als Dichtfläche 44 ausgebildeten Mantelfläche des inneren Lagerrings 6 dichtend aufliegt.

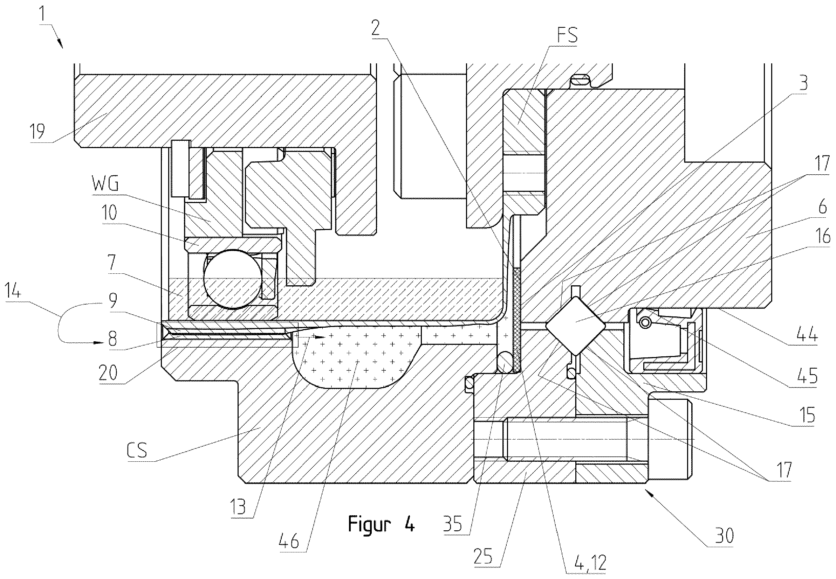

Auf der gegenüberliegenden Seite des Lagerzwischenraums 16 ist die Stirnseite des inneren Lagerrings 6 als Dichtfläche 2 ausgebildet, gegen welche eine in dem Innenraum 28 des Spannungswellengetriebes 1 angeordnete Innendichtung 12 abdichtet. Der verbleibende, von der Innendichtung 12 gegen den Lagerzwischenraum 16 abgedichtete Teil des Innenraums 28 bildet ein Reservoir 46 für Material, welches insbesondere über den Verzahnungsbereich 20 in den Innenraum 28 eintreten kann. Das Reservoir 46 ist in den Figuren 2, 4 und 6 durch eine als kleine Kreuze dargestellte Schraffur im Innenraum 28 gekennzeichnet.

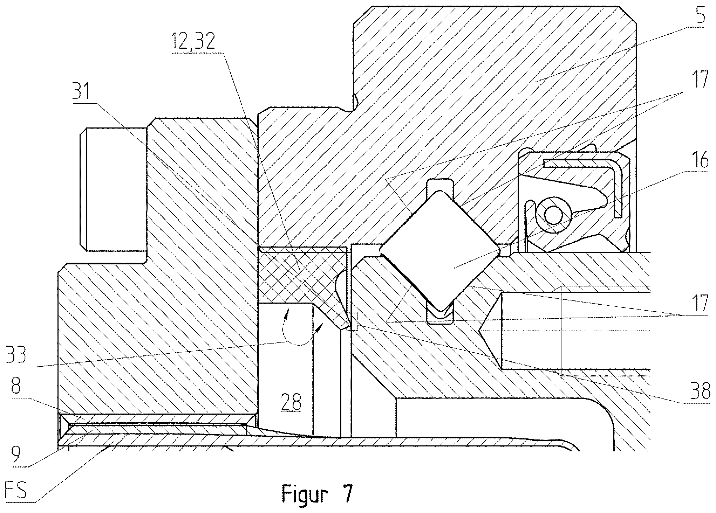

Wie in der Figur 7 näher dargestellt ist, weist diese Innendichtung 12 einen Grundkörper 32 auf, von welchem eine Dichtlippe 31 absteht. Im eingebauten Zustand ist die Dichtlippe 31 in einer Biegerichtung 33 von der Dichtfläche 2 weggebogen, um eine auf die Dichtfläche 2 gerichtete Vorspannung in Form einer Eigenvorspannung aufzubauen. Die Dichtlippe 31 liegt dann in einem Überdeckungsbereich 38 auf der Dichtfläche 2 auf und dichtet somit den Innenraum 28 gegenüber dem Lagerinnenraum 16 ab.

Auf der radial innenliegenden Seite des Übertragungsbauteils FS ist eine Schmiermittelmenge 7 aufgetragen, die als Getriebeschmiermittel bei Bewegung des Übertragungsbauteils FS transportiert wird und so den Zahneingriff an der Innenverzahnung 8 und der Außenverzahnung 9 schmiert. Durch den fortschreitenden Zahneingriff wird das Schmiermittel in den Innenraum 28 des Spannungswellengetriebes 1 befördert und lagert sich dort ab. Hierbei nimmt das Schmiermittel auch Abrieb der Zahnflanken und bei Fehlerfall auch auftretende Späne mit, die jedoch nicht in den Lagerinnenraum 16 eintreten oder durch diesen hindurchtreten sollen.

Die Innendichtung 12 verhindert den Durchtritt des in den Innenraum 28 eintretenden, verbrauchten Schmiermittels. Um eine Beaufschlagung der Innendichtung 12 mit zu viel verbrauchten Schmiermittel zu vermeiden oder zu verringern, ist an dem inneren Lagerring 6 eine zusätzliche Kammer 27 in Form einer Fase vorgesehen, wodurch das Volumen des Innenraums 28 erhöht und an die Schmiermittelmenge 7 angepasst werden kann.

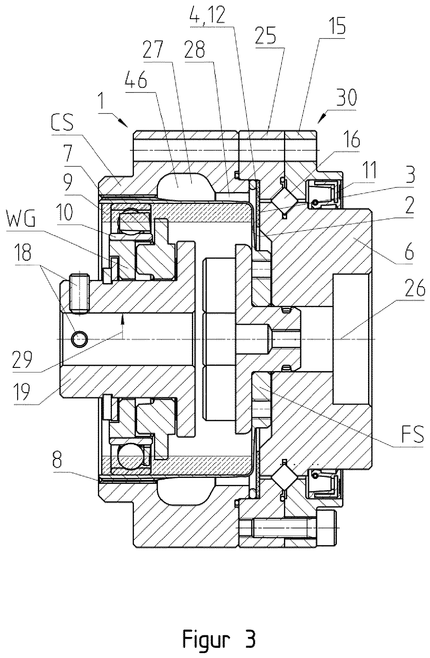

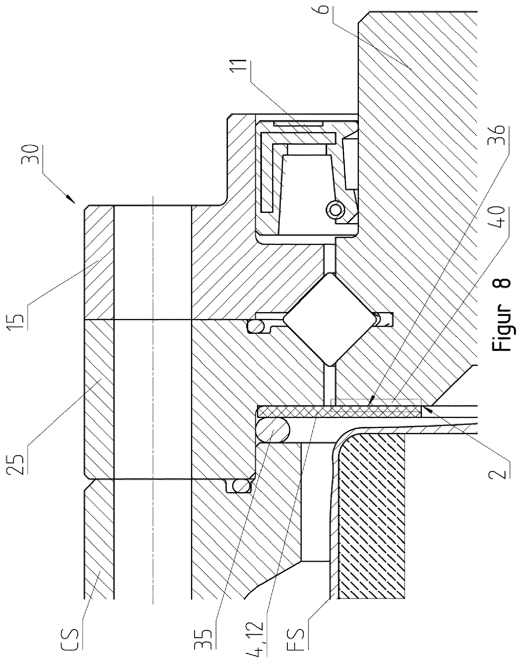

In den Figuren 3, 4 und 8 ist ein zweites, nicht-erfindungsgemäßes Ausführungsbeispiel der Erfindung gezeigt, welches sich von dem ersten Ausführungsbeispiel im Wesentlichen dadurch unterscheidet, dass die Innendichtung 12 hier als Dichtscheibe 4 ausgebildet ist, die den Innenraum 28 gegenüber dem Lagerinnenraum 16 abdichtet. Die Dichtscheibe 4 funktioniert im vorliegenden Fall nach dem Prinzip einer Spaltdichtung, wobei im Bereich eines Dichtabschnitts 3 der Dichtscheibe 4 ein Ringspalt von etwa 0 bis 0,2 mm vorhanden ist, der sich zwischen dem Dichtabschnitt 40 an dem inneren Lagerring 6 und dem Dichtabschnitt 3 der Dichtscheibe 4 ausbildet. Die Dichtscheibe ist durch einen zusätzlichen O-Ring 35 zwischen dem Drehlager 30 und dem Getriebebauteil CS gehalten und dichtet gleichzeitig statisch den zwischen dem Getriebebauteil CS und dem Drehlager vorhandenen Spalt ab. Die Innendichtung 12, vorliegend die Dichtscheibe 4, ist zwischen dem Übertragungsbauteil FS und dem Lagerring 6 des Drehlagers 30 angeordnet und liegt mit ihrer Dichtfläche 36 dichtend an dem Lagerring 6 an.

Der äußere Lagerring ist im vorliegenden Fall zweiteilig mit den Lagerringhälften 15 und 25 ausgebildet. Die Lagerringhälfte 15 ist ähnlich dem ersten Ausführungsbeispiel mit einer Außendichtung 11 versehen, die die äußere Lagerringhälfte 15 gegenüber dem inneren Lagerring 6 abdichtet.

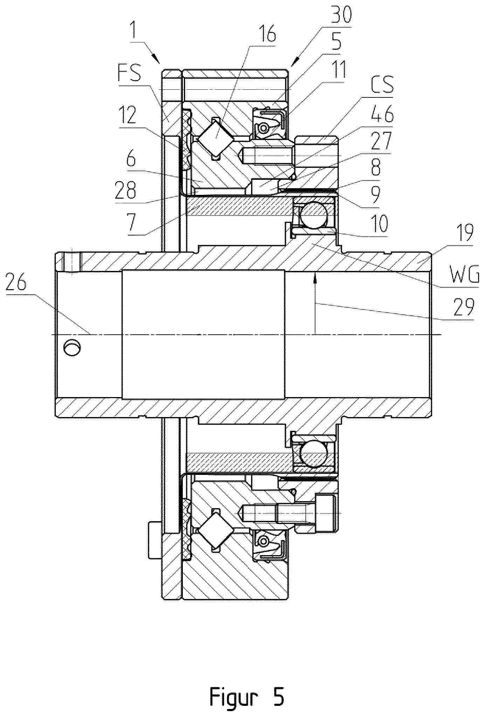

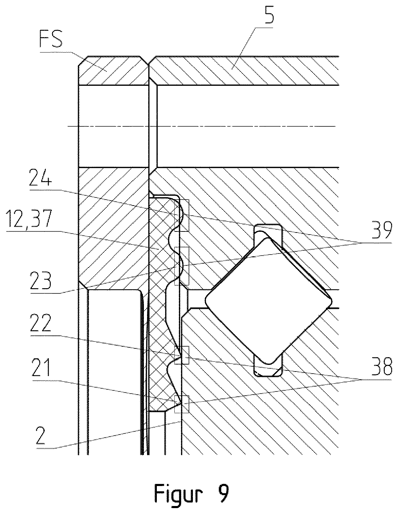

Die Figuren 5, 6 und 9 zeigen ein erfindungsgemäßes Ausführungsbeispiel der vorliegenden Erfindung.

Das erfindungsgemäße Ausführungsbeispiel unterscheidet sich von den beiden ersten Ausführungsbeispielen im Wesentlichen darin, dass die Innendichtung 12 hier zwischen dem Übertragungsbauteil FS und dem äußeren Lagerring 5 im Bereich von zwei nebeneinander liegenden, als O-Ring 23 und O-Ring 24 ausgebildeten Abschnitten eingefügt und gehalten ist. Die Innendichtung 12 weist ein mit den O-Ringen 23, 24 verbundenen Abschnitt auf, der zwei Dichtvorsprünge 21, 22 aufweist, welche in Überdeckungsbereichen 38 an der Dichtfläche 2 des inneren Lagerrings 6 anliegen. Die O-Ringe 23, 24 sind ebenfalls in einem Überdeckungsbereich 39 in Kontakt mit dem Drehlager 30, hier mit dem äußeren Lagerring 5. Zum Ausbilden der Überdeckung sind die O-Ringe 23, 24 bzw. die Dichtkanten 21, 22 in Richtung der Getriebeachse 26 komprimiert, d.h. mit Übermaß in den Spalt zwischen dem Übertragungsbauteil FS und den Lagerringen 5, 6 eingefügt. Der die Dichtkanten 21, 22 aufweisende Abschnitt der strukturierten Dichtscheibe 37 ist biegeschlaff mit dem die O-Ringe 23, 24 aufweisenden Abschnitt verbunden. Die zum Komprimieren der Dichtkanten 21 und 22 erforderliche Vorspannung wird durch die das Übertragungsbauteil FS in Richtung der Getriebeachse 26 aufgebracht.

Denkbar ist jedoch auch, dass die strukturierte Dichtscheibe 37 in sich biegesteif ausgebildet ist und die Vorspannung zum Anlegen der Dichtkanten 21, 22 an die Dichtfläche 2 als Eigenvorspannung der Dichtscheibe 37 aufgebracht wird. Denkbar ist aber auch eine Kombination von Eigenvorspannung und Abstützung durch das Übertragungsbauteil.

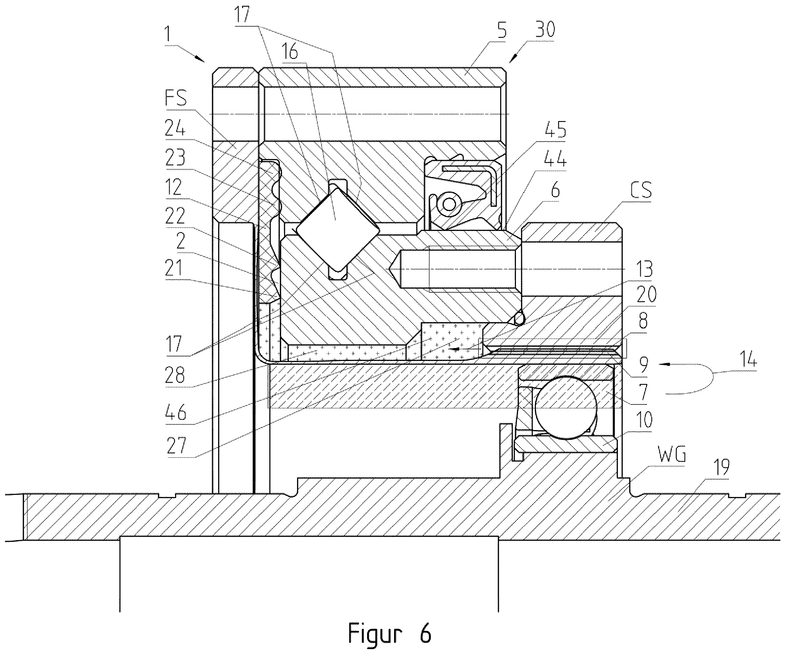

In der Figur 6 ist die Bewegung des Schmiermittels durch das Getriebe näher darstellt. Diese Bewegung lässt sich auf alle Ausführungsausspiele übertragen. Hierbei tritt das Schmiermittel von der Schmiermittelmenge 7 in der Fließrichtung 14 um die Stirnseite des Übertragungsbauteils FS herum und in den Verzahnungsbereich 20 zwischen der Außenverzahnung 9 und der Innenverzahnung 8 hindurch. Der Transport des Schmiermittels von der Innenseite des Übertragungsbauteils FS auf seine Außenseite wird auch dadurch begünstigt, dass an dem Übertragungsbauteil FS und dem Getriebebauteil CS stirnseitig ein nichtgezeigter Gehäuseabschnitt vorgesehen ist. Dieser lenkt den Schmiermittelstrom in Richtung der Fließrichtung 14 um. Durch den Verzahnungsbereich 20 hindurch tritt das Schmiermittel dann in Fließrichtung 13 in den Innenraum 28 des Spannungswellengetriebes 1 ein und verbleibt dort für den Rest der Lebensdauer des Spannungswellengetriebes oder aber bis zu nächsten Wartung.

Auch bei dem zweiten und dritten Ausführungsbeispiel sind zusätzliche Kammern 27 vorgesehen, die das Volumen des Innenraums 28 zur Aufnahme von Schmiermittel vergrößern. Bei dem zweiten Ausführungsbeispiel hat die Kammer 27 eine Taschenform. Bei dem dritten Ausführungsbeispiel ist die Kammer 27 als Absatz in radialer Richtung 29 ausgebildet.

Die drei hier beschriebenen Ausführungsformen beziehen sich auf Spannungswellengetriebe herkömmlicher Bauart. Die vorliegende Erfindung kann aber auch in Spannungswellengetrieben in Flachbauweise oder bei Außenläufergetrieben mit den vorstehend beschriebenen Vorteilen umgesetzt werden.

### Bezugszeichenliste

- 1: Spannungswellengetriebe
- 2: Dichtfläche
- 3: Dichtabschnitt
- 4: Dichtscheibe
- 5: Lagerring
- 6: Lagerring
- 7: Schmiermittelmenge
- 8: Innenverzahnung
- 9: Außenverzahnung
- 10: Wellgeneratorlager
- 11: Außendichtung
- 12: Innendichtung
- 13: Fließrichtung
- 14: Fließrichtung
- 15: Lagerringhälfte
- 16: Lagerzwischenraum
- 17: Lagerlaufbahn
- 18: Madenschraube
- 19: Getriebeeingangswelle
- 20: Verzahnungsbereich
- 21: Dichtvorsprung
- 22: Dichtvorsprung
- 23: O-Ring
- 24: O-Ring
- 25: Lagerringhälfte
- 26: Getriebeachse
- 27: Kammer
- 28: Innenraum
- 29: Radialrichtung
- 30: Drehlager
- 31: Dichtlippe
- 32: Grundkörper
- 33: Biegerichtung

- 35: O-Ring
- 36: Dichtfläche
- 37: strukturierte Dichtscheibe
- 38: Überdeckungsbereich
- 39: Überdeckungsbereich
- 40: Dichtabschnitt
- 41: Stopfen
- 42: Durchgangsbohrung
- 43: Absatz
- 44: Dichtfläche
- 45: Dichtkante
- 46: Reservoir

- CS: Getriebebauteil
- FS: Übertragungsbauteil
- WG: Antriebsbauteil

## Patentansprüche

1. Spannungswellengetriebe (1) mit einem Getriebebauteil (CS) und einem damit in Radialrichtung (29) wenigstens teilweise in Deckung befindlichen, elastisch verformbaren Übertragungsbauteil (FS), das durch ein damit zusammenwirkendes Antriebsbauteil (WG) derart elliptisch verformt ist, dass an dem Getriebebauteil (CS) und dem Übertragungsbauteil (FS) vorgesehene Innen- und Außenverzahnungen (8, 9) in gegenüberliegenden Bereichen einer Ellipsenachse in Eingriff sind, um das Übertragungsbauteil (FS) und das Getriebebauteil (CS) relativ zueinander zu verdrehen, wobei das Übertragungsbauteil (FS) und das Getriebebauteil (CS) mittels eines einen Lagerzwischenraum (16) aufweisenden Drehlagers (30) relativ zueinander drehbar gelagert sind, wobei ein von dem Übertragungsbauteil (FS) sowie der Innen- und Außenverzahnung (8, 9) wenigstens teilweise umschlossener und an das Drehlager (30) angrenzender Innenraum (28) des Spannungswellengetriebes (1) mittels einer als dynamische Dichtung ausgebildeten ist und im Wesentlichen aus einem Elastomer bestehenden Innendichtung (12) gegenüber dem Lagerzwischenraum (16) des Drehlagers (30) abgedichtet ist, **dadurch gekennzeichnet, dass** die Innendichtung (12) als Dichtscheibe (37) und abschnittsweise auch als statische Dichtung ausgebildet ist, und zwischen zwei rotationsfest miteinander verbundenen Teilen (5, FS) des Spannungswellengetriebes (1) eingesetzt ist.

2. Spannungswellengetriebe (1) nach Anspruch 1, **dadurch gekennzeichnet, dass** die Innendichtung mit wenigstens einem O-Ring (23, 24) ausgebildet ist.

3. Spannungswellengetriebe (1) nach einem der vorhergehenden Ansprüche, **dadurch gekennzeichnet, dass** die Innendichtung (12) zwischen dem Übertragungsbauteil (FS) und einem Lagerring (5, 6) des Drehlagers (30) angeordnet ist und dichtend an dem Lagerring (5, 6) anliegt mit wenigstens einem Dichtvorsprung (21, 22).

4. Spannungswellengetriebe (1) nach einem der vorhergehenden Ansprüche, **dadurch gekennzeichnet, dass** die Innendichtung (12) unter Vorspannung an einer Dichtfläche (2) des Spannungswellengetriebes (1) anliegt.

5. Spannungswellengetriebe (1) nach einem der vorhergehenden Ansprüche, **dadurch gekennzeichnet, dass** die Innendichtung (12) in einem Bereich (38) eine Überdeckung gegenüber einer Dichtfläche (2) des Spannungswellengetriebes (1) aufweist.

6. Spannungswellengetriebe (1) nach Anspruch 4 oder 5, wenn jeweils abhängig von Anspruch 3, **dadurch gekennzeichnet, dass** die Innendichtung (12) im Bereich wenigstens eines Dichtvorsprungs (21, 22) zwischen der Dichtfläche (2) und einem weiteren Bauteil (FS) des Spannungswellengetriebes (1) mit Übermaß eingefügt ist, so dass der wenigstens eine Dichtvorsprung (21, 22) die Dichtfläche (2) unter Vorspannung kontaktiert.

7. Spannungswellengetriebe (1) nach Anspruch 6, **dadurch gekennzeichnet, dass** das Übermaß der Innendichtung (12) im Bereich des wenigstens einen Dichtvorsprungs (21, 22) einer Überdeckung von etwa 0 bis etwa 0,4 mm, vorzugsweise einer Überdeckung von etwa 80 µm bis etwa 240 µm, entspricht.

8. Spannungswellengetriebe (1) nach einem der Ansprüche 1 oder 2, **dadurch gekennzeichnet, dass** die Innendichtung (12) einem Dichtabschnitt (40) der Dichtfläche (2), vorzugsweise mit einem Abstand zwischen etwa 0 mm bis etwa 0,2 mm, gegenüberliegt.

9. Spannungswellengetriebe (1) nach einem der vorhergehenden Ansprüche, **dadurch gekennzeichnet, dass** die Innendichtung (12) mindestens zwei als Doppeldichtung wirkende O-Ringe (23, 24) und/oder Dichtvorsprünge (21, 22) und/oder Dichtlippen (31) aufweist.

10. Spannungswellengetriebe (1) nach einem der vorhergehenden Ansprüche, **dadurch gekennzeichnet, dass** die Innendichtung (12) und/oder eine mit der Innendichtung (12) zusammenwirkende Dichtfläche (2) zumindest bereichsweise reibungsmindernd behandelt ist.

## Claims

1. Strain wave gear mechanism (1) with a gear mechanism component (CS) and an elastically deformable transmission component (FS) which is situated at least partially in congruence in the radial direction (29) with the said gear mechanism component (CS), and is deformed elliptically by way of a drive component (WG) which interacts with it, in such a way that internal and external toothing systems (8, 9) which are provided on the gear mechanism component (CS) and the transmission component (FS) are in engagement in opposite regions of an ellipse axis, in order to rotate the transmission component (FS) and the gear mechanism component (CS) relative to one another, the transmission component (FS) and the gear mechanism component (CS) being mounted such that they can be rotated relative to one another by means of a rotational bearing (30) which has a bearing intermediate space (16), an interior space (28) of the strain wave gear mechanism (1), which interior space (28) adjoins the rotational bearing (30) and is enclosed at least partially by the transmission component (FS) and the internal and external toothing system (8, 9), being sealed with respect to the bearing intermediate space (16) of the rotational bearing (30) by means of an inner seal (12) which is configured as a dynamic seal and consists substantially of an elastomer, **characterized in that** the inner seal (12) is configured as a sealing washer (37) and in sections also as a static seal, and is inserted between two parts (5, FS) of the strain wave gear mechanism (1) which are connected fixedly to one another in terms of rotation.

2. Strain wave gear mechanism (1) according to Claim 1, **characterized in that** the inner seal is configured with at least one O-ring (23, 24).

3. Strain wave gear mechanism (1) according to either of the preceding claims, **characterized in that** the inner seal (12) is arranged between the transmission component (FS) and a bearing ring (5, 6) of the rotational bearing (30), and bears sealingly with at least one sealing projection (21, 22) against the bearing ring (5, 6).

4. Strain wave gear mechanism (1) according to one of the preceding claims, **characterized in that** the inner seal (12) bears under prestress against a sealing face (2) of the strain wave gear mechanism (1).

5. Strain wave gear mechanism (1) according to one of the preceding claims, **characterized in that**, in a region (38), the inner seal (12) has an overlap with respect to a sealing face (2) of the strain wave gear mechanism (1).

6. Strain wave gear mechanism (1) according to Claim 4 or 5 if dependent in each case on Claim 3, **characterized in that** the inner seal (12) is inserted with an oversize in the region of at least one sealing projection (21, 22) between the sealing face (2) and a further component (FS) of the strain wave gear mechanism (1), with the result that the at least one sealing projection (21, 22) makes contact with the sealing face (2) under prestress.

7. Strain wave gear mechanism (1) according to Claim 6, **characterized in that** the oversize of the inner seal (12) in the region of the at least one sealing projection (21, 22) corresponds to an overlap of from approximately 0 to approximately 0.4 mm, preferably an overlap of from approximately 80 µm to approximately 240 µm.

8. Strain wave gear mechanism (1) according to either of Claims 1 or 2, **characterized in that** the inner seal (12) lies opposite a sealing section (40) of the sealing face (2), preferably with a spacing of between approximately 0 mm and approximately 0.2 mm.

9. Strain wave gear mechanism (1) according to one of the preceding claims, **characterized in that** the inner seal (12) has at least two O-rings (23, 24) and/or sealing projections (21, 22) and/or sealing lips (31) which act as a double seal.

10. Strain wave gear mechanism (1) according to one of the preceding claims, **characterized in that** the inner seal (12) and/or a sealing face (2) which interacts with the inner seal (12) are/is treated in a friction-reducing manner at least in regions.

## Revendications

1. Transmission harmonique (1) comprenant un composant de transmission (CS) et un composant de transfert (FS) déformable élastiquement, qui se trouve en recouvrement au moins partiel dans la direction radiale (29) avec celui-ci, qui est déformé elliptiquement par un composant d'entraînement (WG) coopérant avec celui-ci de telle sorte que des dentures intérieures et extérieures (8, 9) prévues sur le composant de transmission (CS) et le composant de transfert (FS) peuvent être mises en prise dans des zones opposées d'un axe d'ellipse, afin de faire tourner le composant de transfert (FS) et le composant de transmission (CS) l'un par rapport à l'autre, le composant de transfert (FS) et le composant de transmission (CS) étant montés en rotation l'un par rapport à l'autre au moyen d'un palier rotatif (30) comprenant un espace intermédiaire de palier (16), un espace intérieur (28) de la transmission harmonique (1), au moins partiellement entouré par le composant de transfert (FS), ainsi que la denture intérieure et extérieure (8, 9), et adjacent au palier rotatif (30), étant étanchéifié par rapport à l'espace intermédiaire de palier (16) du palier rotatif (30) au moyen d'un joint intérieur (12) configuré en tant que joint dynamique et essentiellement constitué d'un élastomère, **caractérisé en ce que** le joint intérieur (12) est configuré en tant que disque d'étanchéité (37) et en sections également en tant que joint statique, et est inséré entre deux parties (5, FS) de la transmission harmonique (1) reliées l'une à l'autre de manière immobile en rotation.

2. Transmission harmonique (1) selon la revendication 1, **caractérisée en ce que** le joint intérieur est configuré avec au moins un joint torique (23, 24).

3. Transmission harmonique (1) selon l'une quelconque des revendications précédentes, **caractérisée en ce que** le joint intérieur (12) est agencé entre le composant de transfert (FS) et une bague de palier (5, 6) du palier rotatif (30), et repose de manière étanche sur la bague de palier (5, 6) avec au moins une protubérance d'étanchéité (21, 22).

4. Transmission harmonique (1) selon l'une quelconque des revendications précédentes, **caractérisée en ce que** le joint interne (12) repose sous une précontrainte sur une surface d'étanchéité (2) de la transmission harmonique (1).

5. Transmission harmonique (1) selon l'une quelconque des revendications précédentes, **caractérisée en ce que** le joint intérieur (12) comprend un recouvrement par rapport à une surface d'étanchéité (2) de la transmission harmonique (1) dans une zone (38).

6. Transmission harmonique (1) selon la revendication 4 ou 5, lorsque chacune dépendent de la revendication 3, **caractérisée en ce que** le joint intérieur (12) est inséré avec une surmesure dans la zone d'au moins une protubérance d'étanchéité (21, 22) entre la surface d'étanchéité (2) et un composant supplémentaire (FS) de la transmission harmonique (1), de telle sorte que l'au moins une protubérance d'étanchéité (21, 22) vienne en contact sous une précontrainte avec la surface d'étanchéité (2).

7. Transmission harmonique (1) selon la revendication 6, **caractérisée en ce que** la surmesure du joint intérieur (12) dans la zone de l'au moins une protubérance d'étanchéité (21, 22) correspond à un recouvrement d'environ 0 à environ 0,4 mm, de préférence à un recouvrement d'environ 80 µm à environ 240 µm.

8. Transmission harmonique (1) selon l'une quelconque des revendications 1 ou 2, **caractérisée en ce que** le joint intérieur (12) est opposé à une section d'étanchéité (40) de la surface d'étanchéité (2), de préférence avec un écart compris entre environ 0 mm et environ 0,2 mm.

9. Transmission harmonique (1) selon l'une quelconque des revendications précédentes, **caractérisée en ce que** le joint intérieur (12) comprend au moins deux joints toriques (23, 24) et/ou protubérances d'étanchéité (21, 22) et/ou lèvres d'étanchéité (31) agissant en tant que joint double.

10. Transmission harmonique (1) selon l'une quelconque des revendications précédentes, **caractérisée en ce que** le joint intérieur (12) et/ou une surface d'étanchéité (2) coopérant avec le joint intérieur (12) est traitée au moins en zones pour réduire la friction.
